# DEMANDE DE BREVET EUROPEEN

(11) **EP 1 009 127 A1**
(43) Date de publication de la demande: **14.06.2000**
(21) Numéro de dépôt: 99403029.4
(22) Date de dépôt: 03.12.1999
(51) Int. Cl.: H04L 12/24, H04Q 3/00

(54) **Procédé de création, dans un système informatique, d'associations entre objets d'un arbre de contenance d'un système de gestion de machines**

(30) Priorité: 11.12.1998 FR 9815651
(71) Demandeur: BULL S.A., 78430 Louveciennes (FR)
(72) Inventeur: Leygues, François, 75004 Paris (FR)

(57) **Abrégé**

Un système informatique comprenant des objets inclus dans un arbre de contenance (MIB1) de type hiérarchique conforme au protocole de type CMIP comprenant au moins un domaine de gestion regroupant des objets gérés pour lesquels une même politique de gestion sera appliquée, au moins un ensemble d'objets d'au moins ce domaine de gestion se rapportant à une même machine du système et étant associé à au moins une ressource physique ou logicielle du système informatique. Les objets de l'arbre se rapportant à une même machine et qui sont répartis dans au moins ledit domaine de gestion de l'arbre de contenance (MIB1) sont associés entre eux en créant des objets (OBJ1-OBJ5) spécifiques, la classe d'objets de ces objets spécifiques comprenant au moins un attribut de référence pointant vers un objet de l'arbre de contenance, et en associant ces objets spécifiques.

## Description

La présente invention a pour objet, dans un système informatique, un procédé de création d'associations entre objets inclus dans un arbre de contenance. L'arbre de contenance est inclus dans un système de gestion. Le terme gestion sera utilisé pour être conforme à la traduction Afnor (Association Française de NORmalisation) de « Management ».

Un système informatique comprend une machine ou plusieurs machines reliées au système de gestion par l'intermédiaire d'un réseau LAN (Local Area Network), WAN (Wide Area Network) ou INTERNET. Ce système peut être un système distribué ou non, hétérogène ou non.

Un système distribué est un environnement de système informatique qui fonctionne au moyen d'au moins deux systèmes d'exploitation identiques ou différents. Une machine est associée à un système d'exploitation. Une machine comprend au moins une ressource physique (par exemple des réseaux, des concentrateurs, des segments, etc) ou logique (par exemple une base de données, etc.).

Un système informatique hétérogène contient en général une variété de protocoles de gestion. Dans ce système, chaque machine est associée à au moins un protocole de gestion.

Dans ce système informatique, au moins un agent est, en général situé sur une machine du système informatique. Un agent traite des requêtes qui lui sont adressées. Un agent logiciel gère et met à jour des données sur la machine sur laquelle il est situé. Chaque agent supporte un protocole tel que le protocole SNMP (Simple Network Managment Protocol), le protocole CMIP (Common Managment Information Protocol), le protocole DSAC (Distributed Systems Administration and Control) ou d'autres protocoles. Le système de gestion commande les agents, et l'agent répond et notifie des événements en utilisant un protocole de gestion identique SNMP, CMIS/CMIP ou DSAC/AEP (DSAC Administrative Exchange Protocol). Le système de gestion comprend plusieurs agents dits « agents intégrateurs » en ce sens qu'ils sont intégrés au système de gestion. Les agents et les agents intégrateurs du (des) système(s) de gestion coexistent et communiquent pour masquer l'hétérogénéité du réseau.

Dans ce système informatique, un système de gestion de machines d'un système informatique de type OPENMASTER (marque déposée par la société BULL S.A.), connue de l'homme du métier, est particulièrement bien adapté. Ce système utilise des services CMIS (Common Managment Information Services) normalisés, connus de l'homme du métier. Ce système de gestion peut être assimilé à un ensemble de services qui interagissent entre eux pour donner une représentation virtuelle du monde réel qui est le système informatique. C'est une représentation virtuelle qu'un administrateur manipule (surveillance, action) pour gérer le monde réel. La représentation virtuelle porte sur des objets virtuels du monde réel et constitue un modèle objet. Cette représentation virtuelle est concrétisée par l'intermédiaire d'un arbre de contenance.

Par définition, l'arbre de contenance est strictement hiérarchique. Le service CMIS (Common Managment Information Services) est bien adapté à la structure hiérarchique de l'arbre de contenance. Dans l'exemple de mise en oeuvre, cet arbre est un logiciel conforme au protocole CMIP (Common Managment Information Protocol). Cet arbre comprend en ses noeuds l'ensemble des objets gérés par le système de gestion. Par définition, un objet géré est une vue abstraite, définie pour les besoins de gestion, d'une ressource logique ou physique d'un système. Une classe d'objets gérés est un ensemble nommé d'objets gérés partageant les mêmes propriétés. Un attribut est une caractéristique d'un objet géré qui a un type nommé et une valeur. La valeur d'un attribut d'un objet peut être consultée ou modifiée par une requête adressée à l'objet. Nommer un objet d'une classe donnée, c'est choisir, conformément aux liens de nommage possibles, ce que l'homme du métier appelle le plus souvent son Global Distinguished Name, c'est-à-dire choisir son supérieur dans l'arbre de nommage et choisir un nom que l'homme du métier appelle le plus souvent Relative Distinguished Name vis-à-vis de ce supérieur. Le nommage des objets fait appel à un arbre de nommage. Chaque objet se situe dans l'arbre de nommage par rapport à un supérieur dont il est le subordonné. Cette relation entre subordonnée- et supérieure est spécifiée au niveau des classes par un lien de nommage (name binding en anglais). Lors de la création d'un objet, il faut choisir un seul lien de nommage parmi les liens de nommage possibles pour les objets de cette classe. Plusieurs liens de nommage peuvent être définis pour une même classe, mais un objet ne peut avoir qu'un seul supérieur immédiat.

De manière générale et connue de l'homme du métier, pour créer un objet dans cette base, il faut choisir sa classe, le nommer conformément aux liens de nommage relatifs à la classe, et donner une valeur à ses attributs.

Un arbre de contenance est un arbre constitué d'instances de classes.

Pour permettre différentes organisations et politiques de gestion pour des aspects tels que la sécurité, la comptabilité, la géographie du réseau,..., les objets sont regroupés en domaines de gestion. Un domaine de gestion regroupe un ensemble d'objets gérés pour lesquels une même politique de gestion sera appliquée (politique de sécurité, de comptabilité,...).

Un objet géré se rapportant à une même machine peut appartenir à plusieurs domaines de gestion. Un domaine de gestion est représenté, dans l'arbre de contenance, par un objet géré avec un nom, la liste des objets qu'il contient, etc.

De plus, les objets gérés des différents domaines de gestion entretiennent des relations complexes. Le protocole CMIP offre une modélisation des relations entre objets à l'aide d'un pointeur unidirectionnel. Ce pointeur fait appel à la notion de référence. Cette référence est un attribut de l'objet qui contient le nom (Distinguished name) associé à un autre objet. En d'autres mots, cet attribut pointe sur un autre objet que celui auquel il rattache.

Par exemple, une classe nommée EQUIPEMENT dans un arbre de contenance peut comprendre un pointeur (ou un attribut) nommé NOM DU VENDEUR qui contient le nom (Distinguished name) du vendeur de l'équipement (NOM DU VENDEUR est une autre classe de l'arbre de contenance). L'objet EQUIPEMENT pointe vers l'objet VENDEUR.

Le gros problème est qu'il n'existe pas entre objets d'un même domaine de gestion et entre objets des différents domaines de gestion des relations réciproques (ou bidirectionnelles). Plus précisément, il n'existe pas de correspondance entre objets inclut dans un même domaine de gestion et entre objets répartis dans les différents domaines de gestion.

En effet, l'arbre de contenance établit des relations autres que les relations hiérarchiques entre objets. Ces relations sont réalisées à l'aide d'attributs de relation qui sont des pointeurs et sont utilisés comme des références d'un objet à l'autre.

Il s'ensuit des problèmes d'identité des objets gérés. Dès qu'il est nécessaire d'intégrer une machine sur le système de gestion et donc dans l'arbre de contenance, il se révèle qu'un même objet, par exemple une machine UNIX (marque déposée) sur un réseau, est représenté par des objets de l'arbre de contenance répartis dans divers domaines de gestion. En d'autres termes, plusieurs objets de l'arbre de contenance se rapportent à la même machine UNIX. Par exemple, un objet indique que la machine UNIX supporte le protocole de type réseau IP, un autre objet indique que cette machine UNIX gère des applicatifs suivant les conventions UNIX, un autre objet indique que cette machine est susceptible d'être sécurisée à distance, et un autre objet indique que cette machine est une machine de dépôt de la fonction de distribution de logicielle, etc.

Les identités des objets n'étant pas reliées entre elles entraînent des traitements lourds de synchronisation de la saisie des données. La tâche de maintenir synchrone les différentes représentations d'une même entité logique est très difficile. En effet, si un changement est survenu sur un noeud associé à cet objet, ce changement doit se répercuter sur tous les noeuds où cet objet est représenté. Par exemple, toute découverte d'apparition ou de modification d'une ressource doit être pris en compte sur tous les noeuds concernés de l'arbre.

Le fait que les identités des objets ne sont pas reliées entre elles entraîne des traitements lourds de duplication de la saisie des données.

Un autre problème est du à la complexité des relations qu'entretiennent les différents objets des différents arbres de contenance.

A l'heure actuelle, sur certains systèmes de gestion supportant un protocole de gestion autre que le protocole de type CMIP, ces relations sont généralement représentées par l'intermédiaire de modèles du type « entité-association », connus de l'homme du métier, que l'on trouve dans la plupart des méthodologies de conception de systèmes logiciels orientés objets (par exemple OMT(Object Modeling Technique) ou UML (Unified Method Langage)).

Dans ce type de modélisation, une entité se définit comme un objet concret ou abstrait de la réalité, sur lequel nous souhaitons connaître ou enregistrer des informations qui lui sont spécifiques. Une entité est donc un objet bien précis, identifiable parmi d'autres objets du même type ou de types différents. En fait, en termes de modélisation, on ne s'intéresse pas directement à une entité, mais à un type d'entité. Un type d'entité est le sous-ensemble des objets de la réalité qui regroupe des objets de même nature et jouant le même rôle. On parlera, dans la suite de la description, d'instance d'une entité dans la cas, par exemple, d'un individu particulier faisant partie de l'entité.

Par définition, une association est une correspondance entre deux ou plusieurs instances d'entités exprimant une relation entre deux types d'objets. De la même façon que pour une entité, on parle de manière générale d'un type d'association pour exprimer la classe de toutes les associations possibles entre deux ou plusieurs instances qui vérifient la définition de ce type.

On peut répertorier et donc modéliser les entités et les associations sur un même schéma. Cette modélisation est le résultat d'un arrangement spatial comprenant des liaisons entre les objets.

Un autre aspect important de la modélisation de type « entité-association » est la notion de cardinalités. Il consiste à valoriser les liaisons entre entités et associations en termes de nombre d'instances minimum ou maximum qui peuvent ou doivent exister.

Un premier but est donc de fournir au système de gestion une modélisation des objets à l'image du concept de modélisation « entité-association ».

Un deuxième but visé est de donner la possibilité d'ajouter des objets dans un arbre de contenance et de définir automatiquement les associations entre les objets présents initialement dans l'arbre de contenance et les objets ajoutés ultérieurement dans l'arbre.

Un troisième but visé est la simplicité de mise en oeuvre d'une telle modélisation et a fortiori de réduire le coût d'une telle mise en oeuvre.

A cet effet, une solution à ces problèmes a pour objet un procédé de création d'associations entre objets inclus dans un arbre de contenance de type hiérarchique conforme au protocole de type CMIP et appartenant à un système informatique, ledit arbre comprenant au moins un domaine de gestion regroupant des objets gérés pour lesquels une même politique de gestion sera appliquée, au moins un ensemble d'objets d'au moins ce domaine de gestion se rapportant à une même machine du système et étant associé à au moins une ressource physique ou logicielle du système informatique, caractérisé en ce qu'il consiste à créer une association entre lesdits se rapportant à une même machine et qui sont répartis dans au moins ledit domaine de gestion de l'arbre de contenance, en créant des objets spécifiques, classe d'objets de ces objets spécifiques comprenant au moins un attribut de référence pointant vers un objet de l'arbre de contenance, et en associant ces objets spécifiques.

Un système de gestion est généralement entouré de machines hétérogènes qui constituent des sources de données variées. Ces machines, y compris le moyen de stockage de mémorisation évoqué précédemment, sont interrogeables à distance et ces interrogations sont spécifiques à chaque machine. Ces interrogations sont des requêtes émises en direction d'une machine et qui comprend comme variables des arguments spécifiques à une machine. Egalement, les réponses issues de ces différentes machines ont une sémantique spécifique à la machine.

Un gros problème est que l'opérateur en charge d'interroger une machine doit avoir connaissance du protocole de gestion associé à la machine sur laquelle il désire interroger un objet. Il doit donc configurer la requête d'interrogation en fonction de la machine cible. Cette manoeuvre implique de bonne connaissance de la part de l'opérateur des différentes organisations et politique de gestion ce qui est très coûteux en temps.

D'autre part, le nombre de machines connectées au système de gestion peut être important. Le nombre d'objets à manipuler est à fortiori très important et le type de manipulation résultant de toutes ces machines est en conséquence extrêmement grand et constitue un autre gros problème. Lorsque l'opérateur a sélectionné un objet d'une machine quelconque, Il n'est pas imaginable de proposer comme menu à l'opérateur toutes les opérations associées à l'ensemble des machine.

Enfin, un autre problème est la visualisation des associations incluses dans le moyen de stockage mémorisant les associations.

Un but visé est donc une visualisation de ces associations par l'intermédiaire d'une interface utilisateur.

Un autre but visé est aussi de personnaliser la visualisation des associations.

Une solution a ces derniers problème a pour objet, dans un système informatique, Interface graphique de visualisation sur un écran d'ordinateur d'une communication entre un système de gestion et au moins une machine associée à au moins un protocole de gestion, la machine incluant au moins un objet manipulable, caractérisé en ce qu'il consiste à visualiser une navigation par l'intermédiaire d'un arbre de visualisation configurable constitué de noeuds, la configuration consistant à définir pour chaque noeud un type de décrivant une règle d'expansion de l'arbre de visualisation ABV et un menu associé personnalisé incluant des commandes accessibles à partir des objets visualisés dans l'arbre de visualisation.

Il en résulte un système informatique Système informatique comprenant un système de gestion et au moins une machine associée à au moins un protocole de gestion, la machine incluant au moins un objet manipulable caractérisé en ce qu'il comprend une interface graphique pour la mise en oeuvre du procédé.

Les solutions apportées seront mieux comprises à la lecture de la description qui suit donnée à titre d'exemple et faite en référence aux dessins annexés.

### Dans les dessins:

Pour simplifier la description, dans les dessins les mêmes éléments portent les mêmes références.
- la figure 1 est une vue synoptique de l'architecture d'un système informatique sur lequel peut s'appliquer les différentes solutions;
- la figure 2 est une vue schématique d'un arbre de contenance hiérarchisé;
- la figure 3 est une vue schématique des associations entre objets conformément au procédé de création d'associations.
- la figure 4 est une vue de l'interface de visualisation et des composants mis en jeu pour la mise en oeuvre du procédé d'interrogation.

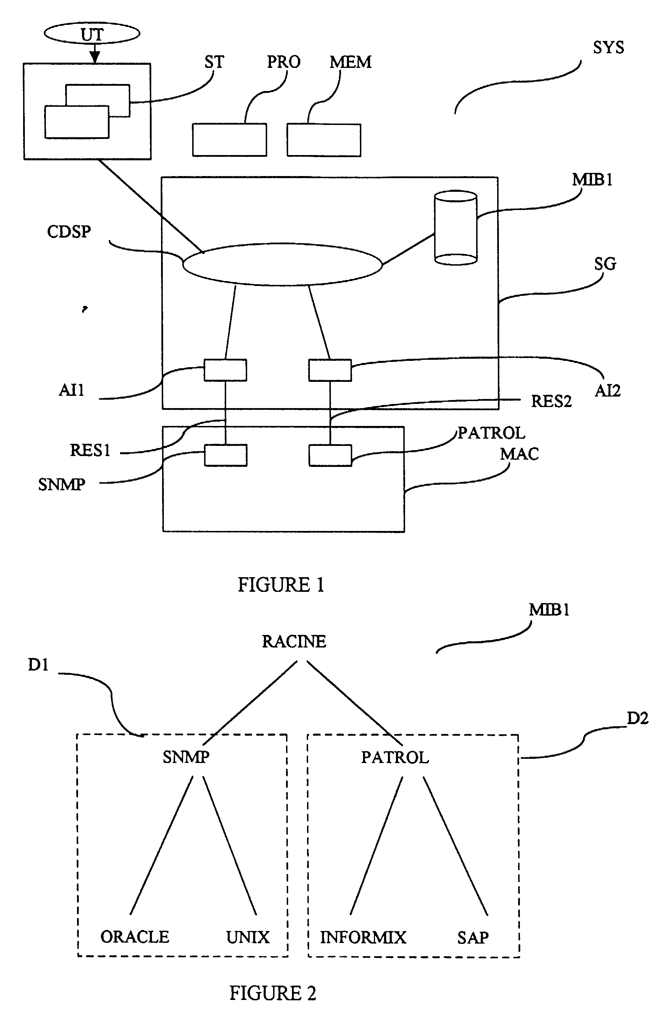

Sur la figure 1, on a représenté un système informatique SYS à environnement distribué de type hétérogène. Dans l'exemple illustré, ce système SYS inclut au moins un système gestionnaire SG, au moins une machine distante MAC supportant au moins un protocole de gestion, et au moins une station de travail ST. Le système comprend au moins un processeur PRO et des moyens de mémoire MEM affectés à une station de travail.

Le système de gestion SG est un système purement logiciel qui peut être compris dans une station de travail ou sur un serveur. Une machine peut comprendre au moins une ressource physique ou logique. Ces ressources constituent des objets manipulables.

Dans l'exemple illustré, la machine MAC comprend des objets manipulables. Une manipulation inclut des commandes ou opérations connues de l'homme du métier. Un protocole de gestion de la machine MAC peut-être indifféremment un protocole de type SNMP, CMIP, DSAC/AEP, PATROL, etc .

D'autre part, pour permettre différentes organisations et politiques de gestion pour des aspects tels que la sécurité, la comptabilité, la géographie du réseau,..., les objets peuvent être regroupés en au moins un domaine de gestion D1 et D2. Un domaine de gestion regroupe un ensemble d'objets gérés pour lesquels une même politique de gestion sera appliquée (politique de sécurité, de comptabilité,...).

Ces différents protocoles de gestion sont associés à un domaine de gestion particulier. Dans l'exemple illustré, la machine MAC supporte deux systèmes de protocole de type SNMP (Simple Network Managment Protocol), par exemple UNIX et ORACLE, et PATROL (par exemple le progiciel Informix et le progiciel SAP (SystemAnalys und Programmentwicklung ). Le protocole SNMP est un protocole d'échange de données de gestion de type réseau (de type TCP/IP). Cette machine est donc associée à deux domaines de gestion. Un premier domaine de type SNMP et un deuxième de type PATROL.

A cet effet, et pour des raisons indiquées dans l'introduction, deux agents sont situés sur la machine MAC. Un premier agent supporte le protocole de type SNMP et un second agent supporte le protocole de type PATROL.

Le système de gestion SG supporte des services de type CMIS (Common Managment Information service) normalisés conforme au modèle OSI connu de l'homme du métier. Ce système SG comprend, dans l'exemple illustré, un routeur CDSP (CMIS Dispatcher Process), connu de l'homme du métier. Le routeur CDSP comprend un programme comprenant lui-même une méthode algorithmique de routage. Le système gestionnaire SG comprend également au moins un agent intégrateur associé à un protocole de gestion afin de masquer l'hétérogénéité du système informatique. Dans l'exemple illustré, deux agents intégrateurs AI1 et AI2 sont associés aux protocoles de gestion respectifs de la machine MAC, à savoir le protocole de gestion de type SNMP et le protocole de gestion de type PATROL. De façon générale, un agent intégrateur est de type logiciel. Il procure des services. Un service peut être une conversion du protocole de gestion. Dans l'exemple illustré, l'agent intégrateur AI1 convertit le protocole de gestion du système de gestion SG en un protocole de gestion associé à la machine MAC. Réciproquement, l'agent intégrateur AI1 convertit le protocole de gestion associé à la machine MAC en un protocole de gestion associé au système de gestion SG. Un agent intégrateur ne se limite pas à ce type de service et procure d'autres services. De manière générale, une conversion de protocole de gestion s'effectue naturellement entre un système de gestion SG et une machine qui supportent des protocoles de gestion différents.

Naturellement, le système de gestion SG peut comprendre plusieurs agents intégrateurs. L'agent intégrateur AI1 de type SNMP est relié à l'agent de même type situé sur la machine MAC. De la même façon, l'agent intégrateur AI2 de type PATROL est relié à l'agent de même type situé sur la machine MAC. Plus précisément, un agent intégrateur du système de gestion est relié à un agent de la machine MAC par l'intermédiaire d'un réseau respectif RES1 et RES2 de type quelconque. Le réseau RES1, tout comme le réseau RES2, peut être un réseau LAN (Local Area Network) ou WAN (Wide Area Network) ou INTERNET. Un ensemble de couches logicielles s'interpose entre le système de gestion SG et les réseaux RES1-RES2, et entre les réseaux RES1-RES2 et la machine MAC. Cet ensemble de couches logicielle repose sur le modèle OSI (Open System Interconnection) d'architecture en couche de l'ISO (International Organization for Standardization), connu de l'homme du métier. Pour des raisons de simplification de la description, cet ensemble de couches logicielles n'est pas représenté sur la figure 1.

Une application de gestion, incluse par exemple sur la station ST, peut être lancée par l'intermédiaire d'un utilisateur UT d'une station ST en direction du système de gestion SG. L'application de gestion est de type logicielle. Un utilisateur peut être un administrateur.

De manière générale, une interface de programmation de type API (Application Program Interface), connue de l'homme de métier, interface l'application de gestion et le routeur CDSP ainsi que le routeur CDSP et un agent intégrateur.

Dans l'exemple illustré, le routeur CDSP route une requête issue de L'application de gestion vers une destination finale. Concrètement, le routeur CDSP route des requêtes issues de l'application de gestion en direction de l'agent intégrateur approprié. Une requête est, de manière générale, une manipulation d'objets sur une machine distante. Par définition, ce routeur mémorise le contexte et route également une réponse en direction de l'application qui est à l'origine de l'interrogation.

Le système de gestion SG comprend aussi un arbre de contenance MIB1 associé aux agents intégrateurs AI1 et AI2. Une vue de cet arbre de contenance MIB est représentée sur la figure 2.

L'arbre de contenance MIB1 peut être entièrement compris dans les agents intégrateurs AI1 et AI2. Pour simplifier la description, on a choisi de séparer, sur la figure 1, l'arbre de contenance associé aux agents intégrateurs AI1 et AI2. Cet arbre MIB1 assure une représentation virtuelle du monde réel qui entoure le système de gestion SG. C'est une représentation virtuelle que l'utilisateur UT ou que l'administrateur manipule (surveillance, action) pour gérer le monde réel. La représentation virtuelle porte sur des objets virtuels du monde réel et constitue un modèle objet. Dans l'exemple illustré, le monde réel est matérialisé par le machine MAC.

La même machine est représentée dans l'arbre de contenance par quatre objets distincts UNIX, ORACLE, INFORMIX, et SAP. Ces quatre objets constituent des facettes d'une même machine dans l'arbre de contenance. En d'autres mots, ces quatre objets se rapportent à la même machine MAC. Les objets de type UNIX et ORACLE appartiennent au domaine de gestion D1 de type SNMP et constituent deux facettes de la machine MAC dans ce domaine de gestion D1. De même, l'objet INFORMIX et l'objet SAP appartiennent au domaine de gestion D2 de type PATROL et constituent deux facettes de la machine MAC dans le domaine de gestion D2. Naturellement, l'arbre de contenance MIB1 peut comprendre d'autres facettes associées à d'autres machines. D'autres facettes d'une machine peuvent aussi concerner des concentrateurs (hub), des routeurs ou encore des segments de réseaux.

En l'espèce, cet arbre de contenance comprend une racine (ROOT). Dans l'exemple illustré, cette racine est reliée à deux noeuds SNMP et PATROL. Un premier noeud correspond à l'objet qui identifie l'agent intégrateur AI1. Ce noeud SNMP est relié à deux autres noeuds subordonnés ORACLE et UNIX. Le deuxième noeud PATROL correspond à l'objet qui identifie l'agent intégrateur AI2. Ce noeud est relié à deux noeuds subordonnés INFORMIX et SAP.

Plusieurs opérations ou manipulations peuvent s'appliquer sur les attributs à condition que celles-ci aient été autorisées lors de la spécification de la classe dans l'arbre de contenance MIB1. Les opérations incluent les commandes « get attribute value » ou encore « replace attribute value ». De même, des opérations peuvent s'appliquer sur des objets. Les opérations peuvent être du type :
- « Create » pour la création d'un objet d'une classe
- « Delete » pour demander à un objet géré de se détruire
- « Action » pour demander à un objet d'exécuter une action spécifiée dans la définition de la classe.

De manière générale, une interface de programmation de type API (Application Program Interface), connue de l'homme de métier, interface l'application APP et le routeur CDSP ainsi que le routeur CDSP et l'agent intégrateur AI1.

Chaque composant référencé de ce système informatique échange des messages. Dans l'exemple illustré, ces messages sont transportés par l'intermédiaire de PDU (Protocol Data Unit), connu de l'homme du métier.

Un objet géré peut appartenir à plusieurs domaines de gestion. Un domaine de gestion est représenté, dans l'arbre de contenance, par un objet géré avec un nom, la liste des objets qu'il contient, etc.

Le problème, tel que mentionné en introduction de la description, est que le système de gestion ne fournit pas d'associations entre objets d'un même domaine de gestion et entre objets répartis dans les différents domaines de gestion.

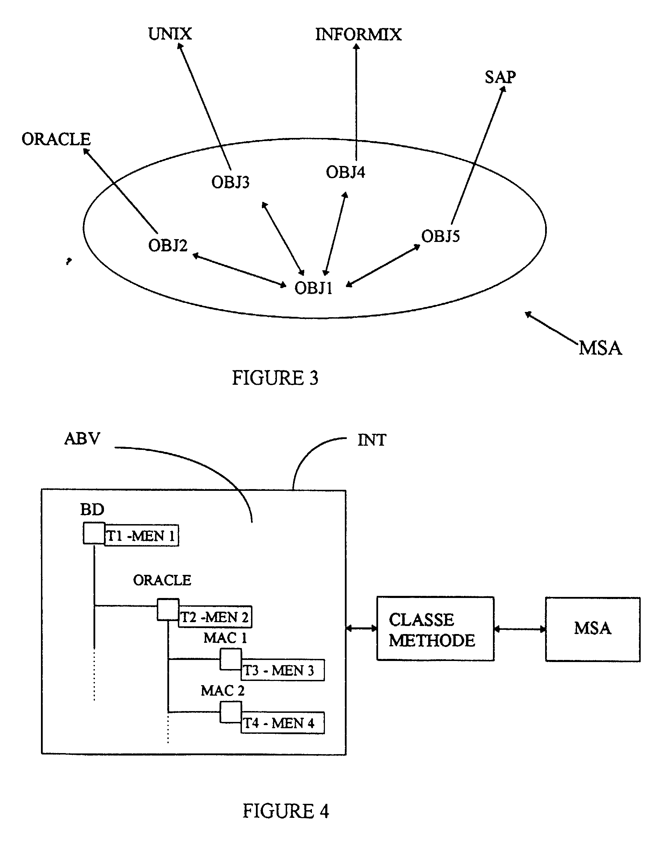

Une solution a ce problème a pour objet un procédé de création d'associations entre les objets qui constituent des facettes d'une même machine et qui sont répartis dans les différents domaines de gestion de l'arbre de contenance. La figure 3 illustre une vue schématique des associations entre objets de l'arbre de contenance conformément à la présente solution.

La solution consiste à créer une association entre lesdits objets se rapportant à une même machine et qui sont répartis dans au moins ledit domaine de gestion de l'arbre de contenance MIB1, en créant des objets OBJ1-OBJ5 spécifiques, la classe d'objets de ces objets spécifiques comprenant au moins un attribut de référence pointant vers un objet de l'arbre de contenance, et en associant ces objets spécifiques.

En d'autres termes, le procédé de création d'associations consiste à fournir, avec le système de gestion SG, au moins un moyen de stockage MSA mémorisant et fournissant les associations qui existent entre les multiples facettes d'une même machine. Les objets spécifiques sont nommés tout comme les objets de l'arbre de contenance sont nommés.

Ces objets spécifiques pointent donc sur des objets de l'arbre de contenance. Une autre particularité de cette solution consiste à fournir un mécanisme d'inversion qui donne la possibilité à un objet de l'arbre de contenance de pointé sur un objet spécifique de la base de topologie.

Le procédé de création d'associations comprend plusieurs étapes :

### 1^{ière} étape :

Dans l'exemple de mise en oeuvre, une première étape consiste à créer, pour chaque machine du système informatique de nouveaux objets OBJ1-OBJ5 autres que les objets de l'arbre de contenance MIB1.

Dans l'exemple illustré, le système informatique SYS comprend une seule machine distante MAC. Le procédé consiste donc à créer pour cette machine au moins un objet spécifique OBJ1-OBJ5, plus précisément:
- au moins un objet spécifique OBJ2-OBJ5 qui est associé à une facette respective (ORACLE, UNIX, Informix, SAP) de cette machine MAC. Ces facettes sont des ressources de la machine MAC. Ces objets seront notés objets ressources pour des raisons de clarté de la description.
- et de préférence, un objet spécifique OBJ1 qui représente la machine associée à ces multiples facettes. De la même façon, cet objet sera noté objet machine pour des raisons de clarté de la description. Cet objet joue le rôle de représentant de l'ensemble des ressources physiques et logicielles de la machine MAC.

De préférence, le nombre d'objets spécifiques ressource OBJ2-OBJ5 créés est au moins égal au nombre de facettes existantes dans l'arbre de contenance, c'est-à-dire au nombre de ressources présentes sur la machine MAC. De la même façon, le nombre d'objets spécifiques machine OBJ1 dans ce moyen de stockage est au moins égal au nombre de machines présentes dans le système informatique SYS.

Par définition, la création d'un objet impose la création d'une classe. Cette classe d'objets est propre au protocole de type CMIP. Cette classe comprend au moins un attribut :
- un premier attribut ATT1 qui désigne le type de la ressource représentant une facette, ou la machine elle-même. De préférence, cet attribut différencie les objets spécifiques ressource et les objets spécifiques machine.
- un second attribut ATT2 qui désigne le nom de l'objet dans l'arbre de contenance. Cet attribut constitue l'identificateur ID de la ressource ou de la machine,
- un troisième attribut ATT3, dit attribut de référence, qui désigne un nom d'objet pointé dans l'arbre de contenance MIB1. En effet, comme il est indiqué dans l'introduction de la description, un objet peut pointer un autre objet dans l'arbre de contenance. Dans l'exemple illustré, l'attribut ATT3 de l'objet OBJ2 est ORACLE. De même, l'attribut ATT3 de l'objet OBJ3 est UNIX, l'attribut ATT3 de l'objet OBJ4 est INFORMIX, et l'attribut ATT3 de l'objet OBJ5 est SAP.
- et de préférence, un quatrième attribut ATT4 qui désigne une valeur numérique obtenue par l'intermédiaire d'une fonction dite de « HASH », connue de l'homme du métier. Cette fonction donne la valeur « hashée » ou clé de l'attribut ATT3. Dans un exemple, cette valeur numérique comprend 120 octets. Ce type de fonction a pour avantage d'assurer l'unicité de l'index avec une très forte probabilité. Un matériel/logiciel de déchiffrement agréé va calculer la clé intermédiaire au moyen d'une fonction à sens unique (appelée "one-way function" ou bien "one-way-hash function" par l'homme du métier). Ainsi, le troisième attribut ATT3 est dit indexé par l'intermédiaire du quatrième attribut ATT4. Une recherche d'un objet dans l'arbre de contenance par l'intermédiaire d'un attribut indexé donne la possibilité de diminuer considérablement le temps de recherche et évite ainsi de naviguer dans l'arbre de contenance d'un attribut à un autre successivement. Ainsi, lorsqu'une référence à un objet de l'arbre de contenance est traitée dans la base de topologie, cette fonction est calculée avec en argument le nom de l'objet de l'arbre de contenance. Cet attribut ATT4, constituant un index, qui est donc la valeur obtenue en appliquant la fonction dite de « HASH » banalisée à ce premier attribut. Ce mécanisme d'indexation d'un attribut est fourni initialement sur le système de gestion SG. Ce mécanisme d'indexation a fait l'objet d'une demande de brevet dont le numéro de dépôt est le FR 98 8294.

Le moyen de stockage des associations MSA comprend au moins un objet OBJ1-OBJ5 de type CMIP qui, de préférence, est défini par une classe unique.

Le moyen de stockage des associations sera dit base de topologie dans la suite de la description.

### 2^{ième} étape :

Cette classe étant définie, on crée des instances de cette classe. Ces instances sont les objets OBJ1-OBJ5.

Ces différentes instances de la classe créée pointent en direction des facettes associées aux objets inclus dans l'arbre de contenance MIB1 par l'intermédiaire de l'attribut de référence ATTR4 dit index obtenu par l'intermédiaire de la fonction de type « HASH ».

A ce stade, la base de topologie ne contient que des objets en tant que tels.

### 3^{ième} étape :

Dans l'exemple de mise en oeuvre, une autre étape consiste à créer des noms d'associations entre les objets de gestion créés et l'objet machine. De préférence, le procédé consiste donc à créer une classe ASSOCIATION qui n'est pas une classe propre au protocole CMIP. De préférence, cette classe association est un programme utilisant un langage de programmation de type extensible tel que le langage de type SML, connu de l'homme du métier. Dans notre exemple, le système de gestion SG comprend des interfaces de type SMUCMIS et peut donc exploiter ce type de langage de programmation.

Cette classe association peut être du type :
ASSOC
DE (donner le type de ressource d'un domaine de gestion)
VERS (donner le type d'une autre ressource issu du même ou d'un autre domaine de gestion).
CARDINALITE tel qu'expliqué dans l'introduction.
NOM DE L'ASSOCIATION : les associations sont nommées pour permettre une navigation entre objets spécifiques créés dans ce moyen de stockage.
MODE : le mode donne le type de l'association.

De préférence, différents types d'associations sont définis
- Un premier type d'associations signifie qu'un objet de la base de topologie est associé à n objets de la même base. Ce type d'associations est uni-directionnelle.
- Un deuxième type d'associations signifie un lien bidirectionnel entre deux objets de la base de topologie. A cet effet, un objet prédéfini ayant une classe prédéfinie est associé à un objet de la base de topologie MSA. Cette classe comprend un attribut incluant une liste de référence à d'autres objets. Automatiquement, chaque objet pointé est mis à jour pour pointer sur l'objet prédéfini. On a donc entre l'objet prédéfini et les différents objets pointés un lien dans les deux sens.
- Enfin, on peut définir un autre type d'association qui se base sur une convention de liens de nommage tels que défini précédemment. Par exemple, on suppose l'existence d'une association nommée ASS entre un objet d'une classe A et un objet d'une classe B. Si a est la valeur de l'attribut de nommage d'une instance de la classe A, alors cette instance est liée par l'association ASS à toutes les instance ou objets de classe B qui ont pour valeur d'attribut de nommage la valeur de l'attribut de nommage a.

### 4^{ième} étape :

A ce stade du procédé de création d'associations, un arbre de contenance réduit à des objets spécifiques comprenant des attributs de référence est créé. Comme sur tout arbre de contenance, Plusieurs opérations ou manipulations peuvent s'appliquer sur les attributs à condition que celles-ci aient été autorisées lors de la spécification de la classe ASSOC.

Une autre étape consiste à créer des opérations nécessaires à la manipulation de ces objets créés à savoir les objets de gestion et l'objet machine.

Les opérations peuvent être par exemple,
- CREER RESSOURCE (ATT1, ATT2, ATT3, ATT4): Cette opération comprend en argument la liste des attributs associés à un objet et permet de créer un objet conforme au protocole CMIP. Successivement, il est possible de créer des noeuds dans la base de topologie.
- CREER ASSOCIATION (objet, nom association, autre objet) comprend en argument le nom d'un objet sélectionné de la base de topologie MSA, un nom d'association, et le nom d'un autre objet de la base de topologie. Cette opération permet de créer une association.
- ASSOCTO (objet, nom association)→{objets} comprend en argument le nom d'un objet sélectionné de la base de topologie, un nom d'association. Cette opération crée la liste des objets qui pointe l'objet sélectionné avec le nom de l'association respective.
- ASSOCFROM (objets, nom association) → {objets} comprend en argument le nom d'un objet de la base de topologie. Cette opération crée la liste des objets, le nom et le type des associations respectives obtenus à partir de l'objet sélectionné.

Par exemple, soit ASS une association liant les objets de type A et B. Soit « a » un objet de type A et « b » un objet de type B. Pour avoir les objets de type B associés à l'objet « a » de type A, on écrit : ASSOCTO (a,X). A l'inverse, pour avoir les objets de type A associés à l'objet « b » de type B, on écrit : ASSOCFROM (b,X).

Naturellement, d'autres opérations peuvent être envisagées.

La manipulation des objets de cette base peut se faire à distance en utilisant un protocole de type CMIP. La manipulation peut aussi se faire localement au système de gestion SG.

A ce stade du procédé, la base de topologie MSA comprenant les objets spécifiques est exploitable par un utilisateur de la station de travail ST.

Cet utilisateur peut naviguer au travers de ce moyen de stockage et obtenir toutes les associations existantes entre les différentes facettes d'une même machine.

Le nom de l'objet est transformé, de préférence automatiquement, en index par l'intermédiaire de la fonction dite de hash décrite précédemment. Cet objet sélectionné est ainsi indexé. Ensuite, un mécanisme de recherche dit mécanisme d'inversion pointe directement sur l'objet spécifique de la base de topologie.

Dans cet exemple de réalisation, une requête spécifique à la base de topologie est une suite de caractère comprenant, de préférence, en première position l'objet constituant un point de départ suivi d'au moins un nom d'associations.

La configuration préalable de la base de données donne aussitôt les noms des associations existantes entre l'objet sélectionné et les autres objets spécifiques associés à la même machine. La configuration préalable de la base de topologie consiste à introduire l'ensemble des facettes dans la base de topologie et à créer les associations entre ces objets tels que décrit précédemment.

De préférence, la base de topologie MSA est mise à jour automatiquement par l'intermédiaire d'un traitement (process en anglais) dit DAEMON quelconque.

D'une manière générale, on peut dire qu'une solution a pour objet un procédé de création d'associations entre objets inclus dans un arbre de contenance MIB1 de type hiérarchique conforme au protocole de type CMIP et appartenant à un système informatique, ledit arbre comprenant au moins un domaine de gestion regroupant des objets gérés, se rapportant à des machines du système, pour lesquels une même politique de gestion sera appliquée, au moins un ensemble d'objets d'au moins ce domaine de gestion se rapportant à une même machine du système et étant associé à au moins une ressource physique ou logicielle du système informatique, caractérisé en ce qu'il consiste à créer une association entre lesdits objets se rapportant à une même machine et qui sont répartis dans au moins ledit domaine de gestion de l'arbre de contenance MIB1,
- en créant des objets OBJ1-OBJ5 spécifiques, classe d'objets de ces objets spécifiques comprenant au moins un attribut de référence pointant vers un objet de l'arbre de contenance,
- et en associant ces objets spécifiques.

On a vu aussi que le procédé d'associations consiste à associer, de préférence, les objets spécifiques entre eux par l'intermédiaire d'associations nommées et en ce que les noms des différentes associations ont un nom unique.

On a vu aussi que les objets spécifiques créés dans le moyen de stockage sont des objets distincts des objets de l'arbre de contenance, notamment en terme d'opérations et de manipulation. Dans un exemple, il consiste à créer de nouvelles opérations autres que les opérations de type CMIS/CMIP pour la création et la manipulation des objets spécifiques. Dans l'exemple de mise en oeuvre, le procédé de création d'association consiste à utiliser le protocole de type CMIP pour la création des objets spécifiques. D'autre part, le moyen de stockage est, dans notre exemple, programmé en langage de type extensible tel que le langage de type SML. Ce moyen de stockage est muni initialement d'une interface de type SMUCMIS et peut donc exploiter cet type de langage de programmation. Avantageusement, la création des associations consiste à utiliser un langage de programmation de type extensible tel que le langage SML.

Dans le procédé de création d'associations, on a vu que la classe d'objets des objets spécifiques comprend:
- un attribut ATT1 désignant le type de la ressource inclus dans la machine MAC,
- un attribut ATT2 désignant le nom de l'objet dans l'arbre de contenance,
- un attribut ATT3 de référence désignant un nom d'objet pointé dans l'arbre de contenance
et, de préférence, le procédé consiste à indexer l'attribut ATT3 de référence des objets spécifiques par l'intermédiaire d'une fonction dite de « Hash ». Il consiste à appliquer la fonction dite de Hash au nom de l'objet sélectionné de l'arbre de contenance, et en ce que la valeur obtenue est la valeur de l'attribut de l'objet spécifique.

Il en résulte un système informatique (SYS) comprenant un système de gestion comprenant des objets inclus dans un arbre de contenance MIB1 de type hiérarchique conforme au protocole de type CMIP, ledit arbre comprenant au moins un domaine de gestion regroupant des objets gérés, se rapportant à au moins une machine du système, pour lesquels une même politique de gestion sera appliquée, au moins un ensemble d'objets d'au moins ce domaine de gestion se rapportant à une même machine du système et étant associé à au moins une ressource physique ou logicielle, caractérisé en ce qu'il comprend un moyen de stockage des mémorisations MSA incluant des objets spécifiques OBJ1-OBJ5, la classe d'objets de ces objets spécifiques comprenant au moins un attribut de référence pointant vers un objet de l'arbre de contenance, et en ce que ces objets spécifiques sont associés entre eux.

Il ressort des exemples illustrés que le procédé de création d'associations offre de nombreux avantages. Grâce à la base de topologie, les objets de l'arbre de contenance sont associés entre eux à l'image du concept de modélisation de type « entité-association » fournit par des méthodes objets telles que la méthode objet OMT connue de l'homme du métier. Cette modélisation des associations dans un arbre de contenance propre au protocole CMIP est simple en ce sens que les objets spécifiques créés OBJ1-OBJ5 contiennent un minimum d'informations. Ce minimum d'informations comprend un attribut de référence vers un autre objet. La mise en oeuvre d'une telle modélisation est donc simple à mettre en oeuvre. Cette modélisation est également peu coûteuse en argent en ce que la solution utilise des fonctionnalités déjà existantes sur un système de gestion de type OPENMASTER (marque déposée). En particulier, dans l'exemple de mise en oeuvre, on utilise un mécanisme d'indexation de ce système de gestion et les associations sont programmées en un langage de type extensible SML existant également sur ce système de gestion.

Dans la suite de la description, on considérera que le système informatique comprend deux machines MAC1 et MAC2. Ces deux machines peuvent être identiques ou non. De plus, on considérera que ces deux machines comprennent un logiciel de gestion de base de données de type ORACLE.

Un autre problème, tel que mentionné en introduction de la description, est que l'opérateur en charge d'interroger un moyen de stockage doit avoir connaissance du protocole de gestion associé à la machine sur laquelle il désire manipuler les objets. En particulier, la base de topologie est associée à un protocole de gestion spécifique.

A cet effet, une solution à ce problème a pour objet, dans un système informatique, une interface graphique de visualisation sur un écran d'ordinateur d'une communication entre le système de gestion (SG) et au moins une machine (MAC) associée à au moins un protocole de gestion, la machine incluant au moins un objet (ORACLE, UNIX, INFORMIX, SAP) manipulable, caractérisé en ce qu'il consiste à visualiser une navigation par l'intermédiaire d'un arbre de visualisation ABV configurable constitué de noeuds,
la configuration consistant à définir pour chaque noeud un type de noeud (T1-T4) décrivant une règle d'expansion de l'arbre de visualisation ABV et un menu associé respectif (MEN1-MEN4) personnalisé incluant des commandes accessibles à partir des objets visualisés dans l'arbre de visualisation.

Le système de gestion SG peut être de type CMIP (Common Managment Information Protocol) normalisé. Un autre système de gestion peut être utilisé.

Un objet peut inclure une application.

Cette interface utilisateur INT peut être fournie en deux parties, une partie gauche visualisant l'arbre expansible et une partie droite pouvant recevoir des écrans spécifiques à une commande associée à une machine. Dans l'exemple illustré, on a représenté uniquement la partie gauche correspondant à l'arbre de visualisation ABV.

la création de l'arbre de visualisation consiste à hiérarchiser les types de noeud dans un arbre de type et à créer au moins un noeud (RACINE, ORACLE, MAC1 et MAC2) dans l'arbre de visualisation avec un type, son type héritant de toutes les propriétés de son supérieur dans la hiérarchie des types.

Dans l'exemple de mise en oeuvre, un noeud de l'arbre de visualisation ABV est un objet distinct des objets issus de la base de topologie MSA. Un noeud de l'arbre de visualisation ABV joue le rôle de représentant de celui-ci, avec des propriétés additionnelles à savoir des commandes accessibles et personnalisées dans le menu qui lui est associé.

Dans l'exemple de mise en oeuvre, l'arbre est inclus dans un fichier de configuration dans un format standard de type XML (Extensible Markup Langage). Par définition, un document appelé DTD (Document Type Definition), connu de l'homme du métier est lié au format XML. Un format XML est construit par l'intermédiaire de crochets appelés « tag » par l'homme du métier incluant des attributs. Ce document contient la configuration et décrit la grammaire, c'est-à-dire la syntaxe du langage et attributs qui décrivent les « tags » qui seront valides dans le document XML.

Un type de noeud de l'arbre de visualisation comprend aussi au moins un attribut. Par exemple, un type de noeud associé aux bases de données comprend :
- un attribut donnant son identifiant,
- un attribut de référence qui fournit une référence vers un type de noeud représentant son supérieur dit super-type dans la hiérarchie des types. Cette notion de super-type est expliquée dans la suite de la description,
- un attribut icône est associé à ce type de noeud pour la représentation graphique.

Un menu est associé à un type de noeud et comprend au moins une commande et/ou au moins un autre menu. Ce menu est personnalisé en ce sens qu'il est spécifique à ce type de noeud et est configurable par un opérateur. Une commande comprend au moins une variable « Arg » qui représentent des attributs liés à un objet d'une machine que l'opérateur a sélectionné.

Dans l'exemple de mise en oeuvre, l'interface de visualisation donne la possibilité de visualiser un moyen de stockage d'objets et plus particulièrement les associations incluses dans la base de topologie MSA. Naturellement, cette solution peut s'appliquer à tout autre moyen de stockage tel qu'un arbre de contenance, une base de données relationnelle, etc.

Dans l'exemple de mise en oeuvre, la commande dite action liée à un type de noeud est, conformément au format XML, du type :
*<!ELEMENT Action (((ResultType|DynamicResultType)?, ( Arg)*, (ResultType|DynamicResultType)?))>*

L'action comprend des attributs nécessaires à l'activation d'une requête spécifique à l'objet de la machine sélectionnée. Cette action comprend les règles d'expansion de l'arbre de visualisation ABV.

Une règle d'expansion de l'arbre de visualisation peut être de différents types. Par exemple, si la sélection d'un noeud de l'arbre de visualisation implique le lancement d'une application sur une machine du système informatique, la règle d'expansion consiste à créer un noeud subordonné au noeud sélectionné de l'arbre de visualisation, ce noeud fils étant propre à visualiser l'application en cours d'exécution et son état courant. Ainsi, si l'exécution de l'application prend fin, le noeud subordonné au noeud sélectionné est détruit. Si la sélection d'un noeud de l'arbre de visualisation implique une requête dans la base de topologie MSA, la règle d'expansion de l'arbre de visualisation ABV consiste à créer des noeuds subordonnés au noeud sélectionné de l'arbre de visualisation ABV. Ces noeuds sont dits noeuds fils.

Dans notre exemple, l'activation d'une requête est effectuée par l'intermédiaire d'un langage de programmation du type JAVA, connu de l'homme du métier. Par définition, un fichier de type JAVA comprend des classes incluant des méthodes. Par définition, une classe d'objets JAVA est une description d'un ensemble d'attributs et de méthodes. Une méthode est chargée de gérer ces attributs. Toute classe contient une méthode appelée constructeur. L'objet retourné par la méthode est implicitement une instance de la classe. En résumé, Le constructeur sert à initialiser les attributs de la classe.

Cette méthode reçoit donc en entrée des attributs valorisés en vue d'instancier la classe qui lui est associée.

Les attributs de l'action sont donc, par exemple,
- une classe de type JAVA
- une méthode de type JAVA

Une requête a un formalisme qui dépend du protocole de gestion associé à l'objet sélectionné. La méthode de type JAVA a pour fonction d'établir cette requête. Il y a autant de classes et méthodes créées que de moyens de stockage ayant un formalisme de requête différent. Dans l'exemple illustré, on a représenté un seul moyen de stockage correspondant à la base de topologie MSA. Il existe donc une seule classe de type JAVA et une seule méthode JAVA chargée d'instancier cette classe.

Pour réaliser l'instantiation d'une classe, il est nécessaire de fournir à la méthode les arguments ARG propres à une requête spécifique d'un moyen de stockage. Le moyen de stockage étant une base de topologie, cet argument est une chaîne de caractère comprenant un noeud de départ et des noms d'associations tels que décrit précédemment.

Un noeud comprend également au moins un attribut :
- un attribut qui donne son identificateur,
- un attribut qui désigne son type,
- au moins un attribut donnant sa situation géographique dans l'arbre de visualisation ABV, à savoir son noeud parent, son chemin d'accès à partir de la racine de l'arbre, etc.,
- une série d'attributs spécifiques associés à l'objet sélectionné d'une machine. Dans l'exemple de réalisation, ces attributs sont les attributs associés à un objet dans la base de topologie.

L'interface de visualisation INT, qui est concrètement un programme de visualisation se connecte alors à la base de topologie et envoi sur cette connexion des requêtes sous forme de chaînes de caractères propres à la base de topologie.

La base de topologie MSA interrogée répond en argument des objets .

Une requête peut être la recherche de toutes les machines sur lesquelles un logiciel de gestion de base de données de type ORACLE est installée. Comme indiqué précédemment, une base de topologie telle que revendiquée est propre à répondre à ce type de requête.

Le programme de type JAVA intercepte et interprète cette réponse et construit de nouveaux noeuds (MAC1 et MAC3) dans l'arbre dits noeuds « fils » subordonnés hiérarchiquement au noeud à partir duquel la requête a été émise et en tenant compte du type de ce noeud fils. Ces nouveaux noeuds ont un type (T3, et T4) respectif auquel on associe automatiquement un menu.

La commande dite action comprend les termes « *ResultType|DynamicResultType* ».

« DynamicResultType » signifie que le type du noeud fils peut être créé dynamiquement, par exemple en prenant comme nom du type le nom d'un attribut spécifique de l'objet interrogé.

« ResultType » signifie que le type peut être déterminé dans le fichier de configuration XML.

De préférence, l'arbre de visualisation ABV comprend au moins un noeud associé aux divers domaines de gestion. Dans l'exemple illustré, l'arbre comprend un noeud BD associé au domaine des bases de données. Ce noeud comprend des attributs et un type et donc un menu respectif. L'arbre comprend également un noeud dit ORACLE associé à un type T2 et donc un menu MEN2.

L'arbre comprend également des noeuds dynamiques créés suite à une interrogation de la base de topologie. MAC1 et MAC2 sont des noeuds retournés par la base de topologie et sont donc des noeuds créés dynamiquement.

Selon une variante, l'objet sélectionné de l'arbre de visualisation ABV peut-être lié au lancement d'une application. Les mêmes principes évoqués précédemment s'appliquent. L'objet sélectionné est associé à un type spécifique. La règle d'expansion associée à ce type de noeud peut consister à créer dans l'arbre de visualisation un noeud subordonné au noeud sélectionné propre à visualiser l'état courant de l'application lancée. Le menu personnalisé associé à ce type de noeud peut consister en deux commandes : le passage sur la fenêtre droite de la visualisation de l'application ou l'arrêt de l'application.

Une étape préalable à l'activation d'une requête consiste à créer un arbre hiérarchique comprenant le type des objets. Le typage des noeuds fait appel à un arbre de typage à l'image d'un arbre de nommage tel qu'on le connaît dans le modèle OSI, connu de l'homme du métier. Chaque noeud se situe dans l'arbre de typage par rapport à un supérieur dont il est le subordonné. Un noeud à un super-type qui est son supérieur hiérarchique vers lequel il pointe dans l'arbre. De préférence, les noeuds d'un type donné héritent de toutes propriétés de leur super-type.

Chaque noeud créé est donc associé à un super-type de noeud. Ainsi la liste des commandes associées à un noeud comprendra au moins une commande spécifique à ce noeud et des commandes spécifiques au super-type vers lequel il pointe. De préférence, dans le but de limiter le nombre de commandes associées à un noeud de l'arbre de visualisation ABV, la liste des commandes associées au super-type peut se limiter à une commande. Par exemple, un super-type de noeud « machine » est créé. Les noeuds qui pointeront sur ce super-type héritera de toutes les propriétés de ce super-type, en particulier des commandes. Un super-type n'est pas visible sur l'arbre. Il constitue simplement un objet pointé par un objet visible de l'arbre.

A cet effet, l'opérateur défini, préalablement à la construction de l'arbre, des types de noeud qui peuvent exister sur les différentes machines constituant le système. Chaque type de noeud comporte une référence à un autre type de noeud et constitue son super-type. Par exemple, un type de noeud est associé aux bases de données. D'autres types de noeud peuvent être introduit dans l'arbre. Un type de noeud peut être associé aux réseaux présents dans le système informatique. La définition du type peut être fonction du besoin d'un opérateur.

En définitive, dans l'hypothèse où la machine MAC1 comprend un logiciel ORACLE et un progiciel INFORMIX, le menu et le type de cette machine MAC1 dans l'arbre de visualisation sous le noeud ORACLE peut ne pas être le même sous le noeud INFORMIX.

Selon une variante, pour des raisons d'ergonomie, l'opérateur peut décider de distinguer les bases de données DB selon leur localisation, par exemple celles situées aux US ou celles situées en France. L'opérateur peut donner un type à tout objet et personnaliser son arbre comme il l'entend. A cet effet, l'opérateur crée au préalable un type base de données par exemple DBs. La règle d'expansion associée au type de noeud DBs peut consister à fournir dynamiquement les types de noeud suivant le résultat de la requête qui peut être du type « . /localisation ». Judicieusement, l'attribut « nom » associé à l'objet sélectionné est choisi. Le type attribué aux objets sélectionnés seront donc constitué de la concaténation de la chaîne de caractère DB et du résultat de la requête fournissant la localisation. En définitive, deux noeuds DB1 et DB2 sont créés dans l'arbre ABV avec un type associé DBFrance et DBUS, France et US étant les valeurs des attributs « noms » des objets sélectionnés. Les caractéristiques particulières de ces types de noeuds ont été défini au préalable. Les bases de données situées aux US ont donc un type et donc un menu associé et les bases de données situées en France ont un autre type et un menu associé.

Rappelons que l'interface utilisateur ne se limite à la visualisation des objets inclus dans un moyen de stockage des associations mais s'étend à tout moyen de stockage incluant des objets manipulables et applications présents sur les machines du système informatique.

D'une manière générale, on peut dire que l'interface graphique de visualisation sur un écran d'ordinateur d'une communication entre un système de gestion (SG) et au moins une machine (MAC) associée à au moins un protocole de gestion, la machine incluant au moins un objet (ORACLE, UNIX, INFORMIX, SAP) manipulable, consiste à visualiser une navigation par l'intermédiaire d'un arbre de visualisation ABV configurable constitué de noeuds, la configuration consistant à définir pour chaque noeud
■ un type de noeud (T1-T4) décrivant une règle d'expansion de l'arbre de visualisation ABV
■ et un menu associé respectif (MEN1-MEN4) personnalisé incluant des commandes accessibles à partir des objets visualisés dans l'arbre de visualisation.

On a vu précédemment que la création de l'arbre de visualisation consiste
■ à hiérarchiser les types de noeud dans un arbre de type
■ et à créer au moins un noeud (RACINE, ORACLE, MAC1 et MAC2) dans l'arbre de visualisation avec un type, son type héritant de toutes les propriétés de son supérieur dans la hiérarchie des types.

Une règle d'expansion peut être personnalisée pour les besoins d'un opérateur. Par exemple, si la sélection d'un noeud de l'arbre de visualisation implique le lancement d'une application sur une machine du système informatique, la règle d'expansion consiste à créer un noeud subordonné au noeud sélectionné de l'arbre de visualisation, ce noeud fils étant propre à visualiser l'application en cours d'exécution et son état courant.

De préférence, un menu comprend au moins une commande et/ou au moins un autre menu.

Un type de noeud peut être déterminé de plusieurs façons. Par exemple, il peut consister à créer le type du noeud fils dynamiquement, par exemple en prenant comme nom du type le nom d'un attribut choisi au préalable parmi la liste des attributs associés à l'objet sélectionné. Selon un autre exemple, il peut consister à déterminer le type du noeud fils par l'intermédiaire d'un fichier de configuration.

De préférence, le fichier de configuration est un format standard de type XML (Extensible Markup Langage).

De préférence, l'interface comprend deux parties, une partie visualisant l'arbre expansible et une partie pouvant recevoir des écrans spécifiques à une commande associée à un moyen de stockage d'une machine.

Il en résulte un système informatique comprenant un système de gestion (SG) et au moins une machine (MAC) associée à au moins un protocole de gestion, la machine incluant au moins un objet (ORACLE, UNIX, INFORMIX, SAP) manipulable caractérisé en ce qu'il comprend une interface graphique pour la mise en oeuvre du procédé conformément aux revendications 1 à 9.

L'interface est un arbre de visualisation dont l'expansion est fonction de règles d'expansion. Les règles d'expansion de l'arbre sont définies par l'intermédiaire d'au moins une classe de type JAVA incluant au moins une méthode de même type chargée d'instancier cette classe.

On peut dire que l'interface graphique et le système informatique résultant offre de nombreux avantages. Cette interface donne la possibilité à un opérateur de développer l'arbre de visualisation grâce à des règles d'expansion qu'il défini au préalable. Il peut notamment visualiser sur son arbre des associations qui existent entre objets inclus dans le moyen de stockage des associations. Dans la mesure où le moyen de stockage des associations inclus des objets et des associations, l'interface graphique fournit un système permettant de fournir des commandes sur les objets visualisés dans l'arbre de visualisation. Ce système de commandes est hautement configurable, en ce sens qu'il permet à un utilisateur de définir le lancement de commandes particulières. La configuration consiste à donner à tout noeud un type qui contient la définition du menu associé. Par exemple, si la machine MAC1 comprend un logiciel ORACLE et un progiciel INFORMIX, le menu et le type de cette machine MAC1 dans l'arbre de visualisation sous le noeud ORACLE peut ne pas être le même sous le noeud INFORMIX. L'interface et ses règles d'expansion peuvent définir les commandes disponibles et accessibles simplement en fonction du contexte de visualisation.

## Revendications

1. Procédé de création d'associations entre objets inclus dans un arbre de contenance (MIB1) de type hiérarchique conforme au protocole de type CMIP et appartenant à un système informatique, ledit arbre comprenant au moins un domaine de gestion regroupant des objets gérés, se rapportant à au moins une machine (MAC) du système, pour lesquels une même politique de gestion sera appliquée, au moins un ensemble d'objets d'au moins ce domaine de gestion se rapportant à une même machine du système et étant associé à au moins une ressource physique ou logicielle du système informatique, caractérisé en ce qu'il consiste à créer une association entre lesdits objets se rapportant à une même machine et qui sont répartis dans au moins ledit domaine de gestion de l'arbre de contenance (MIB1),
■ en créant des objets (OBJ1-OBJ5) spécifiques, la classe d'objets de ces objets spécifiques comprenant au moins un attribut de référence pointant vers un objet de l'arbre de contenance,
■ et en associant ces objets spécifiques.

2. Procédé selon la revendication 1, caractérisé en ce qu'il consiste à associer les objets spécifiques entre eux par l'intermédiaire d'associations nommées et en ce que les noms des différentes associations ont un nom unique.

3. Procédé selon l'une des revendications 1 ou 2, caractérisé en ce qu'il consiste à créer de nouvelles opérations autres que les opérations de type CMIS/CMIP pour la création et de manipulation des objets spécifiques.

4. Procédé selon l'une des revendications 1 à 4, caractérisé en ce qu'il consiste à utiliser le protocole de type CMIP pour la création des objets spécifiques.

5. Procédé selon l'une des revendications 1 à 5, caractérisé en ce que la création des associations consiste à utiliser un langage de progammation de type extensible tel que le langage de type SML.

6. Procédé selon l'une des revendications 1 à 5, caractérisé en ce que la classe d'objets des objets spécifiques comprend:
- un attribut (ATT1) désignant le type de la ressource inclus dans la machine MAC,
- un attribut (ATT2) désignant le nom de l'objet dans l'arbre de contenance,
- un attribut (ATT3) de référence désignant un nom d'objet pointé dans l'arbre de contenance

7. Procédé selon la revendication 6, caractérisé en ce qu'il consiste à indexer l'attribut (ATT3) de référence des objets spécifiques par l'intermédiaire d'une fonction dite de « Hash ».

8. Procédé selon l'une des revendications 1 à 5, caractérisé en ce qu'il consiste appliquer la fonction dite de Hash au nom de l'objet sélectionné de l'arbre de contenance, et en ce que la valeur obtenue est la valeur de l'attribut de l'objet spécifique.

9. Système informatique (SYS) comprenant un système de gestion (SG) comprenant des objets inclus dans un arbre de contenance (MIB1) de type hiérarchique conforme au protocole de type CMIP, ledit arbre comprenant au moins un domaine de gestion regroupant des objets gérés, se rapportant à au moins une machine du système, pour lesquels une même politique de gestion sera appliquée, au moins un ensemble d'objets d'au moins ce domaine de gestion se rapportant à une même machine du système et étant associé à au moins une ressource physique ou logicielle, caractérisé en ce qu'il comprend un moyen de stockage des mémorisations MSA incluant des objets spécifiques (OBJ1-OBJ5), la classe d'objets de ces objets spécifiques comprenant au moins un attribut de référence pointant vers un objet de l'arbre de contenance, et en ce que ces objets spécifiques sont associés entre eux.
